# EUROPÄISCHE PATENTSCHRIFT

(11) **EP 2 097 460 B1**
(45) Veröffentlichungstag und Bekanntmachung des Hinweises auf die Patenterteilung: **15.02.2012**
(21) Anmeldenummer: 07822555.4
(22) Anmeldetag: 13.11.2007
(51) Int. Cl.: C08F 6/00, C08F 6/04, C08F 6/28

(54) **VERFAHREN ZUM ENTFERNEN VON ISOBUTENOLIGOMEREN AUS EINEM ISOBUTENPOLYMERISAT**
METHOD FOR THE REMOVAL OF ISOBUTENE OLIGOMERS FROM AN ISOBUTENE POLYMER
PROCÉDÉ POUR EXTRAIRE DES OLIGOMÈRES D'ISOBUTÈNE D'UN POLYMÈRE D'ISOBUTÈNE

(30) Priorität: 14.11.2006 EP 06124070
(43) Veröffentlichungstag der Anmeldung: 09.09.2009
(73) Patentinhaber: BASF SE, 67056 Ludwigshafen (DE)
(72) Erfinder: RATH, Hans Peter, 67269 Grünstadt (DE); HANEFELD, Phillip, 69115 Heidelberg (DE); MACH, Helmut, 69115 Heidelberg (DE)
(86) Internationale Anmeldenummer: PCT/EP2007/062286
(87) Internationale Veröffentlichungsnummer: WO 2008/058970

(56) Entgegenhaltungen:
- WO-A-02/06359
- US-A- 5 448 001
- US-A- 5 516 818

## Beschreibung

Die vorliegende Erfindung betrifft ein Verfahren zum Entfernen von Isobutenoligomeren aus einem Isobutenpolymerisat.

Hochreaktive Polyisobutene mit einem zahlenmittleren Molekulargewicht von 500 bis 5000 sind als Zwischenprodukte zur Herstellung von Additiven für Schmier- und Kraftstoffe begehrt. Ein Großteil wird weiteren Umsetzungen zugeführt, wie der Maleinierung, Imidierung, Hydroformylierung oder reduktiven Aminierung. Bei diesen Umsetzungen werden polare Gruppen in das Molekül eingeführt und es entstehen amphiphile Moleküle, deren Eigenschaften durch die Coexistenz des unpolaren Polyisobutenylrests und der polaren Gruppe bestimmt werden.

Als hochreaktive Polyisobutene werden solche angesprochen, die einen hohen Gehalt an endständigen Methylidengruppen aufweisen. Unter Methylidengruppen werden im Sinne der vorliegenden Anmeldung solche Doppelbindungen verstanden, deren Lage im Polyisobutenmakromolekül durch die allgemeine Formel 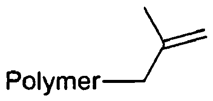 beschrieben wird, in der "Polymer" für den um eine Isobuteneinheit verkürzten Polyisobutenrest steht. Die Methylidengruppen zeigen die höchste Reaktivität, wohingegen die weiter im Inneren der Makromoleküle liegenden Doppelbindungen keine oder nur eine geringere Reaktivität bei Funktionalisierungsreaktionen zeigen.

Die Herstellung der Polyisobutene gelingt durch Lewis-Säure-katalysierte Polymerisation von Isobuten. Als Lewis-Säure-Katalysator wird häufig Bortrifluorid, meist in Kombination mit einer zur Komplexbildung mit Bortrifluorid befähigten Verbindung, verwendet. Die Polymerisation erfolgt im Allgemeinen in Gegenwart eines inerten Verdünnungsmittels, wie n-Hexan. Sobald der gewünschte Polymerisationsgrad erreicht ist, wird der Katalysator entfernt und/oder inaktiviert, und nicht umgesetztes Isobuten und das inerte Verdünnungsmittel werden durch Abdestillieren entfernt. Ein derartiges Verfahren ist z. B. in der US 5,408,018 offenbart. Ein in US 5,516,818 beschriebenes Verfahren soll der Verringerung des Gehalts an flüchtigen organischen Verbindungen in wässrigen Polymerisationssystemen dienen. Dabei bringt man das wässrige Polymerisationssystem in Kontakt mit einem organischen Lösungsmittel, lässt das Lösungsmittel in die Polymerpartikel absorbieren und strippt das organische Lösungsmittel mit einem Gas oder Dampf ab.

Bei der Polymerisation von Isobuten werden nicht Moleküle eines einheitlichen Molekulargewichts erhalten. Vielmehr wird eine Molekulargewichtsverteilung erhalten, die in der logarithmischen Darstellung ein sichtbares Maximum Mm aufweist und sowohl zu höheren als auch niedrigeren Molekulargewichten abfällt. Die Anwesenheit von Oligomeren und niedermolekularen Polymeren ist in einigen Anwendungen aus verschiedenen Gründen nachteilig. Sie führen unter anderem zu einer unerwünschten Verbreiterung der Molekulargewichtsverteilung. Besonders störend sind die Isobutenoligomere, wenn das Polymerisat mit polaren Gruppen funktionalisiert werden soll. Da in den Umsetzungsprodukten der Isobutenoligomere der unpolare Rest nur wenige Isobuteneinheiten umfasst, weichen deren Eigenschaften von denen der größeren Moleküle ab, d. h. sie weisen die erwünschten Eigenschaften nur in eingeschränktem Umfang auf, oder sie haben sogar ausgesprochen nachteilige Eigenschaften für die spätere Anwendung. So können die Funktionalisierungsprodukte der Isobutenoligomere ein inakzeptables Alterungs- und Quellverhalten haben. Es sind verschiedene Abfangreaktionen und Nachbehandlungen vorgeschlagen worden, um die schädlichen Wirkungen kleiner polar funktionalisierter Moleküle zu reduzieren.

Ein Teil der Isobutenoligomere wird bei der Aufarbeitung der Isobutenpolymerisate entfernt. Die Aufarbeitung umfasst üblicherweise das Abdestillieren des nicht umgesetzten Isobutens und/oder des inerten Verdünnungsmittels in einem oder mehreren Destillationsschritten. Der letzte Schritt ist gewöhnlich eine Vakuumdestillation bei typischerweise 200 bis 220 °C und einem Druck von 3 bis 30 mbar (absolut), wobei in gewissem Umfang Isobutenoligomere abdestilliert werden und das Polyisobuten als Rückstand verbleibt. Die letzten Reste der Isobutenoligomere werden im Polyisobuten hartnäckig festgehalten, ihr Dampfdruck um mehr als eine Zehnerpotenz reduziert. Die Temperatur und/oder Verweilzeit bei der Vakuumdestillation können aber nicht beliebig erhöht werden, da das Polyisobuten bei zu hoher Temperatur und/oder zu langer Verweilzeit depolymerisiert und seine Reaktivität leidet.

Der vorliegenden Erfindung liegt die Aufgabe zugrunde, Isobutenpolymerisate in einem größeren Umfang von Isobutenoligomeren zu befreien, als durch bloße Anwendung von Temperatur und/oder Vakuum möglich ist.

Die Aufgabe wird gelöst durch ein Verfahren zum Entfernen von Isobutenoligomeren aus einem Isobutenpolymerisat mit einem zahlenmittleren Molekulargewicht von 500 bis 5000, indem man das Isobutenpolymer als solches oder in Form einer Lösung mit Dämpfen eines gesättigten Kohlenwasserstoffs mit 10 bis 20 Kohlenstoffatomen strippt und die unerwünschten Isobutenoligomere zumindest teilweise austreibt.

"Isobutenpolymere" (bzw. Isobutenpolymerisate) sind einfach ethylenisch ungesättigte Moleküle, die vorwiegend (vorzugsweise zu wenigstens 95 Gew.-%) aus Isobuten-Wiederholungseinheiten aufgebaut sind. Das erfindungsgemäße Verfahren ist besonders anwendbar auf Isobutenpolymerisate mit einem zahlenmittleren Molekulargewicht (vor der erfindungsgemäßen Behandlung) von 500 bis 5000, vorzugsweise 900 bis 2500.

Das behandelte Isobutenpolymerisat weist in der Regel einen Gehalt an Molekülen mit endständigen Methylidengruppen (terminalen Gruppen der Formel -[-C(CH₃)=CH₂]) von mehr als 60 Mol-%, insbesondere mehr als 80 Mol-% auf. Die Dispersität Mw/Mn beträgt vorzugsweise nicht mehr als 2,0, insbesondere nicht mehr als 1,9.

Unter "Isobutenoligomeren" sollen einfach ethylenisch ungesättigte Moleküle verstanden werden, die aus Isobuten-Wiederholungseinheiten aufgebaut sind und im Allgemeinen ein Molekulargewicht von weniger als 500 aufweisen. Meist umfassen die Isobutenoligomere 2 bis 6 Isobuteneinheiten. Durch das erfindungsgemäße Verfahren kann insbesondere eine weitgehende Entfernung der Isobutendimere (Isooctene), Isobutentrimere, Isobutentetramere, Isobutenpentamere und Isobutenhexamere erzielt werden.

Das Strippen des Isobutenpolymerisats kann auf verschiedene Weisen erreicht werden, die dem Fachmann geläufig sind. So kann man einen gasförmigen Strom des gesättigten Kohlenwasserstoffs durch eine flüssige Phase des Isobutenpolymerisats oder einer Lösung davon leiten. Alternativ kann man einen gasförmigen Strom des gesättigten Kohlenwasserstoffs, beispielsweise in einer Kolonne oder einer Blasensäule, einer flüssigen Phase des Isobutenpolymerisats oder einer Lösung davon entgegenführen. Die Kolonne bzw. Blasensäule können Einbauten enthalten, die eine große Grenzfläche zwischen Gas- und Flüssigphase schaffen und den Stoffaustausch erleichtern. Geeignete Einbauten sind z. B. ungeordnete oder strukturierte Packungen oder Böden.

In einer besonders zweckmäßigen Ausführungsform versetzt man das Isobutenpolymerisat (als solches oder in Form einer Lösung) mit dem gesättigten Kohlenwasserstoff und dampf den gesättigten Kohlenwasserstoff zumindest teilweise ab. Das Abdampfen erfolgt bei erhöhter Temperatur und/oder vermindertem Druck, z. B. bei 100 bis 300 °C, vorzugsweise 150 bis 250 °C, und weniger als 1 bar, vorzugsweise weniger als 150 mbar, z. B. 1 bis 30 mbar (absolut), am meisten bevorzugt bei Temperaturen von 150 bis 250 °C unter einem Druck von 2 bis 20 mbar(absolut). Das Abdampfen kann auch so durchgeführt werden, dass ein flüssiges Gemisch des gesättigten Kohlenwasserstoffs und des Isobutenpolymerisats von einem hohen Druck auf einen niedrigen Druck entspannt (geflasht) wird, wobei sich infolge der Entspannung eine Gasphase bildet, die die Hauptmenge des gesättigten Kohlenwasserstoffs und der Isobutenoligomere umfasst. Das Gemisch wird vor dem Entspannen vorzugsweise aufgeheizt, z. B. auf 100 bis 300 °C, vorzugsweise 150 bis 250 °C. Die Druckdifferenz beträgt z. B. 2 bis 20 bar und der Enddruck 1 bis 50 mbar, vorzugsweise 2 bis 30 mbar (absolut).

Die technische Herstellung von Isobutenpolymeren umfasst in der Regel abschließende Destillations- und/oder Druckentspannungschritte zur Entfernung des nicht umgesetzten Isobutens und/oder flüchtiger Verdünnungsmittel. Das erfindungsgemäße Verfahren kann in der Praxis daher leicht dadurch ausgeführt werden, dass man das Isobutenpolymerisat zumindest vor dem letzten Destillations- und/oder Druckentspannungsschritt mit einem erfindungsgemäß verwendeten gesättigten Kohlenwasserstoff versetzt.

Eine weitergehende Entfernung der Isobutenoligomere kann erreicht werden, wenn man die Schritte des Kohlenwasserstoff-Zusatzes und -Abdampfens wenigstens einmal, z. B. ein-, zwei oder dreimal, wiederholt.

Die angewandte Menge des gesättigten Kohlenwasserstoffs beträgt (pro Cyclus von Kohlenwasserstoff-Zusatz und -Abdampfen) in der Regel 1 bis 15 Gew.-%, meist 5 bis 10 Gew.-%, bezogen auf das Gewicht des Isobutenpolymerisats.

Man kann den abgedampften gesättigten Kohlenwasserstoff gewünschtenfalls kondensieren, mitgeführte Isobutenoligomere abtrennen und den gesättigten Kohlenwasserstoff wieder verwenden.

Der erfindungsgemäß verwendete gesättigte Kohlenwasserstoff weist 10 bis 20 Kohlenstoffatome, insbesondere 10 bis 16 Kohlenstoffatome auf. Es handelt sich um lineare, verzweigte oder cyclische gesättigte Kohlenwasserstoffe und insbesondere um technische Gemische derartiger Kohlenwasserstoffe. Geeignete technische Kohlenwasserstoffgemische sind z. B. Isoparaffine, wie sie in Raffinerien bei der Entparaffinierung von Mineralölen anfallen. Der bevorzugte Siedebereich bei Normaldruck (1013 mbar) beträgt 100 bis 350 °C, insbesondere 100 bis 250 °C.

In vielen Fällen ist die Verwendung engsiedender gesättigter Kohlenwasserstofffraktionen bevorzugt. Vorzugsweise weisen daher wenigstens 90 Gew.-% des gesättigten Kohlenwasserstoffs einen Siedepunkt bei Normaldruck innerhalb eines Temperaturbereiches von 15°C auf.

In bestimmten Ausführungsformen ist bevorzugt, dass der gesättigte Kohlenwasserstoff Fraktionen umfasst, deren Siedepunkt zwischen den Siedepunkten von Isobutendimer und Isobutentrimer liegt. Z. B. weisen wenigstens 40 Gew.-%, vorzugsweise wenigstens 50 Gew.-%, insbesondere wenigstens 90 Gew.-% des gesättigten Kohlenwasserstoffs einen Siedepunkt auf, der zwischen den Siedepunkten von Isobutendimer und Isobutentrimer liegt.

In anderen Ausführungsformen ist bevorzugt, dass der gesättigte Kohlenwasserstoff Fraktionen umfasst, deren Siedepunkt zwischen den Siedepunkten von Isobutentrimer und Isobutentetramer liegt. Z. B. weisen wenigstens 40 Gew.-%, vorzugsweise wenigstens 50 Gew.-%, insbesondere wenigstens 90 Gew.-% des gesättigten Kohlenwasserstoffs einen Siedepunkt auf, der zwischen den Siedepunkten von Isobutentrimer und Isobutentetramer liegt.

Isobutenpolymerisate sind bisweilen hochviskos und bilden an kälteren Gefäßwänden, Wärmetauschflächen oder Grenzflächen zähe Grenzschichten, die den Wärme- und Stoffaustausch behindern. Es kann daher zweckmäßig sein, das Isobutenpolymerisat vor dem Strippen mit einem schwerflüchtigen Verdünnungsmittel zu versetzen. Die schwerflüchtigen Verdünnungsmittel wirken als Fließ- und Siedehilfsmittel. Sie führen einerseits zu einer drastischen Verringerung der Viskosität des Isobutenpolymerisats. Die schwerflüchtigen Verdünnungsmittel führen zu einer verstärkten Brown'schen Molekularbewegung und brechen so die als thermische Isolatoren wirkenden zähflüssigen Grenzschichten des hochmolekularen Polyisobutens auf und verbessern die Entgasung. Die schwerflüchtigen Verdünnungsmittel verbleiben weitgehend im Isobutenpolymer; sie müssen daher so ausgewählt werden, dass ihre Anwesenheit die spätere Verwendung des Isobutenpolymers nicht beeinträchtigt. Der bevorzugte Siedebereich der schwerflüchtigen Verdünnungsmittel bei Normaldruck (1013 mbar) beträgt 300 bis 450 °C. Als schwerflüchtige Verdünnungsmittel sind z. B. Mineralöle, wie Stellöle, oder Polyalpha-olefine, wie hydrierte Decentrimere geeignet. Schwerflüchtige Verdünnungsmittel können z. B. in einer Menge von 1 bis 15 Gew.-%, meist 5 bis 10 Gew.-%, bezogen auf das Gewicht des Isobutenpolymerisats, verwendet werden. Die Anwesenheit eines Verdünnungsmittels erleichtert z. B. auch die Filtration des Reaktionsgemisches im Anschluss an eine chemische Derivatisierung des Polyisobutens.

Die Polymerisation von Isobuten kann kontinuierlich oder diskontinuierlich erfolgen, erfolgt jedoch vorzugsweise kontinuierlich. Verfahren zur kontinuierlichen Polymerisation von Isobuten in Gegenwart von Lewis-Säure-Katalysatoren in inerten Verdünnungsmitteln sind an sich bekannt. Bei einem kontinuierlichen Verfahren wird kontinuierlich ein Teil der im Polymerisationsreaktor entstandenen Reaktionsmischung ausgetragen. Eine dem Austrag entsprechende Menge an Einsatzmaterialien, hier Isobuten bzw. Isobuten-haltiger Kohlenwasserstoff, wird dem Polymerisationsreaktor kontinuierlich zugeführt. Das Verhältnis von der im Polymerisationsreaktor befindlichen Stoffmenge zu der Menge, die ausgetragen wird, bestimmt die Verweilzeit. Das Umlauf/Zulauf-Verhältnis, das bei der kontinuierlichen Polymerisation von Isobuten zu Polyisobuten in der Regel im Bereich von 1000:1 bis 1:1, bevorzugt im Bereich von 500:1 bis 5:1 und insbesondere im Bereich von 200:1 bis 50:1 Vol./Vol. liegt, bestimmt den Konzentrationssprung des Isobutens im Reaktor. Die mittlere Verweildauer des zu polymerisierenden Isobutens im Polymerisationsreaktor kann fünf Sekunden bis mehrere Stunden betragen. Verweilzeiten von 1 bis 30 Minuten, insbesondere 2 bis 20 Minuten, sind besonders bevorzugt.

Die Polymerisation des Isobutens erfolgt in den üblichen Reaktoren, wie Rührkesseln, Rohr-, Rohrbündel- und Schlaufenreaktoren, wobei Schlaufenreaktoren, d. h. Rohr(bündel)reaktoren mit Rührkesselcharakteristik, bevorzugt sind. Besonders günstig sind Rohrreaktoren mit Rohrquerschnitten, die in Teilbereichen zu Turbulenzen führen.

Die Polymerisation wird in der Regel bei einer Polymerisationstemperatur im Bereich von -60 °C bis +40 °C, vorzugsweise unterhalb 0°C, besonders bevorzugt im Bereich von -30 °C bis 0 °C und speziell im Bereich von -25 °C bis -5°C durchgeführt. Die Polymerisationswärme wird entsprechend mit Hilfe einer Kühlvorrichtung abgeführt. Diese kann beispielsweise mit flüssigem Ammoniak als Kühlmittel betrieben werden. Eine andere Möglichkeit, die Polymerisationswärme abzuführen, ist die Siedekühlung. Dabei wird die freiwerdende Wärme durch teilweises Verdampfen des Reaktionsgemisches, z. B. des Isobutens und/oder anderer leicht flüchtiger Bestandteile des Isobutenzulaufs oder eines leicht flüchtigen Verdünnungsmittels wie z. B. Isobutan oder Propan abgeführt. Vorzugsweise arbeitet man unter isothermen Bedingungen, d. h. die Temperatur der flüssigen Reaktionsphase im Polymerisationsreaktor hat einen stationären Wert und ändert sich während des Betriebs des Reaktors nicht oder nur in geringem Maße.

Die Konzentration des Isobutens in der flüssigen Reaktionsphase liegt in der Regel im Bereich von 0,2 bis 50 Gew.-%, vorzugsweise im Bereich von 0,5 bis 20 Gew.-%, bezogen auf die flüssige Reaktionsphase.

Als Einsatzstoffe eignen sich sowohl Isobuten selbst als auch Isobuten-haltige C₄-Kohlenwasserstoffströme, beispielsweise C₄-Raffinate, C₄-Schnitte aus der Isobutan-Dehydrierung, C₄-Schnitte aus Steamcrackern, FCC-Crackern (fluid catalyzed cracking), sofern sie weitgehend von darin enthaltenem 1,3-Butadien befreit sind. Geeignete C₄-Kohlenwasserstoffströme enthalten in der Regel weniger als 1000 ppm, vorzugsweise weniger als 200 ppm, Butadien. Die Anwesenheit von 1-Buten, cis- und trans-2-Buten ist weitgehend unkritisch, obwohl sie bei niedrigen Isobutenkonzentrationen in geringem Maße in die wachsende Polymerkette eingebaut werden. Typischerweise liegt die Isobuten-Konzentration in den C₄-Kohlenwasserstoffströmen im Bereich von 20 bis 70 Gew.-%. Bei Einsatz von C₄-Schnitten als Einsatzmaterial übernehmen die von Isobuten verschiedenen Kohlenwasserstoffe die Rolle eines weitgehend inerten Verdünnungsmittels. Der Isobuten-haltige Zulauf kann geringe Mengen an Kontaminanten, wie Wasser, Carbonsäuren oder Mineralsäuren enthalten, ohne dass es zu kritischen Ausbeute- oder Selektivitätseinbrüchen bei der Polymerisation kommt. Es ist zweckdienlich, eine Anreicherung dieser Verunreinigungen zu vermeiden, indem man solche Schadstoffe beispielsweise durch Adsorption und feste Adsorbentien, wie Aktivkohle, Molekularsiebe, Aluminiumoxid, Kieselgel oder Ionenaustauscher aus dem Isobuten-haltigen Zulauf entfernt, vorzugsweise bei -10 bis 30 °C.

Als inerte Verdünnungsmittel sind solche Lösungsmittel oder Lösungsmittelgemische geeignet, die gegenüber den eingesetzten Reagenzien inert sind. Geeignete Verdünnungsmittel sind beispielsweise gesättigte Kohlenwasserstoffe, wie Butan, Pentan, Hexan, Heptan, z. B. n-Hexan, i-Octan, Cyclopentan, halogenierte Kohlenwasserstoffe wie Methylenchlorid, Dichlormethan oder Trichlormethan sowie Mischungen der vorgenannten Verdünnungsmittel, wovon technisches Pentan oder Hexan mit einem Anteil des n-Alkans von 40 bis 70 Gew.-% besonders bevorzugt sind. Vorzugsweise werden die Verdünnungsmittel vor ihrem Einsatz von Verunreinigungen wie Wasser, Carbonsäuren oder Mineralsäuren befreit, beispielsweise durch Adsorption an festen Adsorbentien, wie Aktivkohle, Molekularsieben, Aluminiumoxid, Kieselgel oder lonenaustauschern.

Als Lewis-Säure-Katalysator ist Bortrifluorid, vorzugsweise in Kombination mit einem Cokatalysator, besonders bevorzugt. Zweckmäßigerweise wird gasförmiges Bortrifluorid benutzt, wobei technisches, noch geringe Mengen Schwefeldioxid und SiF₄ enthaltendes, vorzugsweise aber hochreines Bortrifluorid mit einer Reinheit von etwa 99,5 Gew.-% verwendet werden kann.

Geeignete Cokatalysatoren sind in der Regel sauerstoffhaltige Verbindungen, die vorzugsweise wenigstens ein zweibindiges Sauerstoffatom aufweisen. Geeignete sauerstoffhaltige Verbindungen sind neben Wasser organische Verbindungen mit bis zu 30 Kohlenstoffatomen. Beispiele hierfür sind C₁-C₃₀-Alkanol und -Cycloalkanole, C₂-C₁₀-Diole, C₁-C₂₀-Carbonsäuren, C₄-C₁₂-Carbonsäureanhydride sowie C₂-C₂₀-Dialkylether. Hiervon sind C₁-C₂₀-Alkanole, insbesondere C₁-C₄-Alkanole bevorzugt, die gegebenenfalls zusammen mit C₂-C₂₀-Dialkylether eingesetzt werden können.

Als Cokatalysator sind einwertige sekundäre C₃-C₂₀-Alkanole besonders bevorzugt, insbesondere in Kombination mit tert-Butylethern. Beispielhaft seien genannt Isopropanol, 2-Butanol, sec-Pentanol, sec-Hexanol, sec-Heptanol, sec-Octanol, und dergleichen. Besonders bevorzugt werden 2-Butanol und insbesondere Isopropanol verwendet. Als tert-Butytlether seien Methyl-tert-butylether (MTBE), Ethyl-tert-butylether (ET-BE) und Isopropyl-tert-butylether genannt, wovon MTBE wegen seiner leichten Verfügbarkeit bevorzugt ist.

Vorzugsweise beträgt das Molverhältnis von Bortrifluorid zu Cokatalysator 1:1 bis 1:10, insbesondere 1:1,1 bis 1:5 und besonders bevorzugt 1:1,2 bis 1:2,5.

Die Konzentration des Lewis-Säure-Katalysators im Reaktor liegt in der Regel im Bereich von 0,01 bis 1 Gew.-%, bezogen auf die flüssige Reaktionsphase, insbesondere im Bereich von 0,02 bis 0,7 Gew.-% und besonders bevorzugt im Bereich von 0,03 bis 0,5 Gew.-%.

Nach Erreichen des gewünschten Polymerisationsgrades wird der Katalysator abgetrennt und/oder deaktiviert und auf diese Weise die Polymerisation abgebrochen. Zur Katalysatordeaktivierung können Desaktivatoren, wie beispielsweise Wasser, Alkohole, Acetonitril, Ammoniak oder wässrige Lösungen von Mineralbasen oder Carbonaten, verwendet werden, die dem Reaktionsgemisch zugefügt werden. Hierzu können auch angesäuerte wässrige Lösungen verwendet werden. Anstatt den Katalysator im Reaktionsgemisch quantitativ zu deaktivieren, kann man ihn entweder quantitativ aus dem Reaktionsgemisch abtrennen oder teilweise aus dem Reaktionsgemisch abtrennen und den restlichen Katalysator im Reaktionsgemisch deaktivieren. Mit Vorteil erfolgt die Katalysatorabtrennung gemäß der Beschreibung der WO 99/31151.

Zur Abtrennung des Katalysators aus dem Reaktionsgemisch empfiehlt es sich, zuvor die Isobutenkonzentration auf weniger als 2 Gew.-%, vorzugsweise weniger als 1 Gew.-% und insbesondere weniger als 0,5 Gew.-%, bezogen auf das Reaktionsgemisch, zu verringern. Zur Abtrennung des Katalysators verwendet man bevorzugt lösliche Bortrifluorid-Komplex-Katalysatoren mit begrenzter Löslichkeit im Reaktionsgemisch und/oder kühlt das Reaktionsgemisch auf Temperaturen von beispielsweise 5 bis 30 Kelvin unterhalb der Reaktionstemperatur, vorzugsweise 10 bis 20 Kelvin unterhalb der Reaktionstemperatur, ab; Verweilzeiten von 10 bis 60 Minuten sind vorteilhaft. Durch die Verringerung der Isobutenkonzentration und/oder das Abkühlen sinkt die Löslichkeit des Katalysators im Reaktionsgemisch. Der Katalysator fällt in Form feinverteilter Tröpfchen an, die in der Regel rasch in eine kohärente Phase übergehen. Die Katalysatorphase hat eine höhere Dichte als die Polymerlösung und kann mit Hilfe von Abscheidern, Separatoren oder sonstigen Vorrichtungen von der Produktphase abgetrennt werden. Falls der Katalysator nur in Form feinstverteilter Tröpfchen anfällt, kann man sich üblicher Maßnahmen zur Tröpfchenvergrößerung, beispielsweise Koaleszierfilter, bedienen.

Im weiteren Gang der Aufarbeitung wird das Reaktionsgemisch zweckmäßigerweise einer oder mehreren Extraktionen - üblicherweise mit Wasser - zur Entfernung von Restmengen an Katalysator unterworfen.

Das Reaktionsgemisch wird dann destillativ von nicht umgesetztem Isobuten und/oder inerten Verdünnungsmittel befreit. Der Begriff "Destillation" ist weitestgehend zu verstehen und soll alle Vorgehensweisen umfassen, bei der das nicht umgesetzte Isobuten und/oder das Verdünnungsmittel als Gas bzw. Dampf von dem als Rückstand anfallenden Polyisobuten abgetrennt werden. Das gasförmige Isobuten und Verdünnungsmittel werden in der Regel kondensiert und in die Polymerisationsapparatur zurückgeführt. Unter Destillation sollen insbesondere eine isobare Erwärmung unter Abdampfen von Isobuten und/oder Verdünnungsmittel oder eine adiabatische Entspannung des - zweckmäßigerweise vorerwärmten - Reaktionsgemischs unter Bildung einer Gas- und einer Flüssigphase sowie Kombinationen von adiabatischer Entspannung und isobarer Erwärmung verstanden werden. Die Destillation erfolgt vorzugsweise unter Verwendung von Kolonnen mit trennwirksamen Einbauten, wie Glockenböden oder Füllkörperpackungen.

Die Destillation kann ein- oder mehrstufig, z. B. zweistufig, durchgeführt werden. Bei mehrstufiger Durchführung werden im ersten und gegebenenfalls weiteren Schritten die Hauptmenge des nicht umgesetzten Isobutens und/oder des Verdünnungsmittels entfernt, während im letzten Schritt die verbliebenen Reste des Isobutens und Verdünnungsmittels abdestilliert werden.

Die Erfindung wird durch die folgenden Beispiele näher veranschaulicht.

### Beispiele

Aus einem Zulauf folgender Zusammensetzung wurde in einem kontinuierlichen Polymerisationsverfahren Polyisobuten hergestellt:

| | |
|---|---|
| Isobutan | < 1 Gew.-% |
| n-Butan | < 1 Gew.-% |
| 1-Buten | < 1 Gew.-% |
| trans-2-Buten | < 1 Gew.-% |
| cis-2-Buten | < 1 Gew.-% |
| Isobuten | 45 Gew.-% |
| Hexan | 54 Gew.-% |
| Butadien | < 50 ppm |
| Wasser | etwa 2 ppm |

Es wurden Bortrifluorid in einer Menge von 25 mmol/l Zulauf und Isopropanol in 1,6-facher molarer Menge, bezogen auf Bortrifluorid, zugesetzt. Der Umlaufreaktor wurde so gekühlt, dass die Temperatur im Reaktionsmedium -13 °C betrugt. die Verweilzeit betrug 8,4 Minuten das Umlauf/Zulauf-Verhältnis 50 und die Isobutenkonzentration 5 Gew.-%. Der Reaktionsaustrag wurde mit Wasser intensiv vermischt. Anschließend trennte man die beiden entstehenden Phasen. Die obere Phase (im Folgenden "Rohprodukt" genannt) bestand aus Polyisobuten, nicht umgesetztem Isobuten und Hexan.

Das Rohprodukt wurde über einen Wärmetauscher geleitet und das erhitzte Rohprodukt dann in einen Entspannungsbehälter entspannt. Dabei verdampfte die Hauptmenge an nicht umgesetztem Isobuten und Hexan und wurde als Gasphase am Kopf des Entspannungsbehälters abgezogen.

Die Flüssigphase wurde mit Hilfe eines Wärmetauschers erwärmt. Die erhitzte Flüssigphase wurde unter Entspannung auf 1 bar in eine Destillationskolonne eingeführt. Es ging ein Destillat über, das im Wesentlichen aus Isobuten und Hexan bestand. Für die folgenden Versuche wurden Aliquote des Destillationssumpfs verwendet.

Die Aliquote wurden mit der in der Tabelle angegebenen Menge Kohlenwasserstoff versetzt und am Rotationsverdampfer bei 220 °C und 3 mbar je 30 Minuten behandelt. Der Rückstand wurde ausgewogen und der gefundene Wert von der Polyisobuten-Einwaage abgezogen. Als "Verlust" ist die Differenz zwischen dem normalen Entgasungsverlust (d. h. ohne zugesetzten Kohlenwasserstoff) und dem tatsächlichen Entgasungsverlust angegeben. Der normale Entgasungsverlust betrug 1,9 Gew.-%. Der Quotient Mw/Mn ist ein Maß für die Molekulargewichtsverteilung (gewichtsmittleres Molekulargewicht / zahlenmittleres Molekulargewicht).

| Beispiel | Paraffin | Paraffin [Gew.-%] | Verlust [Gew.-%] | Mn | Mw/Mn |
|---|---|---|---|---|---|
| 1 (Vergleichsbeispiel) | - | - | 0 | 2300 | 1,90 |
| 2 | C₁₀H₂₂ | 10 | 2,2 | 2400 | 1,79 |
| 3 | C₁₀H₂₂ | 2x10 | 3,3 | 2500 | 1,73 |
| 4 | C₁₀H₂₂ | 3x10 | 3,9 | 2500 | 1,71 |
| 5 | C₁₀H₂₂ | 4x10 | 4,2 | 2500 | 1,70 |
| 6 | C₁₄H₃₀ | 10 | 3,6 | 2500 | 1,72 |
| 7 | C₁₄H₃₀/C₂₀H₄₂ | 10/3 | 4,2 | 2550 | 1,70 |
| 8 (Vergleichsbeispiel) | - | - | 0 | 1030 | 1,65 |
| 9 | C₁₄H₃₀ | 10 | 3,1 | 1110 | 1,54 |

Man sieht, dass die erfindungsgemäße Strippbehandlung zu Polymeren mit einheitlicherer Molekulargewichtsverteilung führt. Aufgrund der Entfernung niedermolekularer Anteile steigt das zahlenmittlere Molekulargewicht Mn an.

## Patentansprüche

1. Verfahren zum Entfernen von Isobutenoligomeren aus einem Isobutenpolymerisat mit einem zahlenmittleren Molekulargewicht von 500 bis 5000, indem man das Isobutenpolymerisat als solches oder in Form einer Lösung mit Dämpfen eines gesättigten Kohlenwasserstoffs mit 10 bis 20 Kohlenstoffatomen strippt und die Isobutenoligomere zumindest teilweise austreibt, wobei Isobutenoligomere aus Isobutenwiederholungseinheiten aufgebaute ethylenisch ungesättigte Moleküle mit einem Molekulargewicht von weniger als 500 sind.

2. Verfahren nach Anspruch 1, wobei man das Isobutenpolymerisat mit dem gesättigten Kohlenwasserstoff versetzt und den gesättigten Kohlenwasserstoff zumindest teilweise abdampft.

3. Verfahren nach Anspruch 2, wobei man ein Gemisch des Isobutenpolymerisats und des gesättigten Kohlenwasserstoffs erwärmt und entspannt, wobei infolge der Entspannung der gesättigte Kohlenwasserstoff zumindest teilweise verdampft.

4. Verfahren nach Anspruch 2 oder 3, wobei man die Schritte des Kohlenwasserstoff-Zusatzes und -Abdampfens wenigstens einmal wiederholt.

5. Verfahren nach einem der vorhergehenden Ansprüche, wobei wenigstens 90 Gew.-% des gesättigten Kohlenwasserstoffs einen Siedepunkt bei Normaldruck innerhalb eines Temperaturbereiches von 15°C aufweisen.

6. Verfahren nach einem der vorhergehenden Ansprüche, wobei wenigstens 40 Gew.-% des gesättigten Kohlenwasserstoffs einen Siedepunkt aufweisen, der zwischen den Siedepunkten von Isobutendimer und Isobutentrimer liegt.

7. Verfahren nach einem der Ansprüche 1 bis 5, wobei wenigstens 40 Gew.-% des gesättigten Kohlenwasserstoffs einen Siedepunkt aufweisen, der zwischen den Siedepunkten von Isobutentrimer und Isobutentetramer liegt.

8. Verfahren nach einem der vorhergehenden Ansprüche, wobei der gesättigte Kohlenwasserstoff 10 bis 16 Kohlenstoffatome aufweist.

9. Verfahren nach einem der vorhergehenden Ansprüche, wobei man das Isobutenpolymerisat vor dem Strippen mit einem schwerflüchtigen Verdünnungsmittel versetzt.

10. Verfahren nach einem der vorhergehenden Ansprüche, wobei das Isobutenpolymerisat ein zahlenmittleres Molekulargewicht von 900 bis 2500 aufweist.

11. Verfahren nach einem der vorhergehenden Ansprüche, wobei die Isobutenoligomere 2 bis 6 Isobuteneinheiten umfassen.

## Claims

1. A process for removing isobutene oligomers from an isobutene polymer having a number-average molecular weight of from 500 to 5000, by stripping the isobutene polymer, as such or in the form of a solution, with vapors of a saturated hydrocarbon having from 10 to 20 carbon atoms and at least partly deriving out the isobutene oligomers wherein isobutene oligomers are ethylenically unsaturated molecules which have been formed from repeat isobutene units and have a molecular weight of less than 500.

2. The process according to claim 1, wherein the isobutene polymer is admixed with the saturated hydrocarbon and the saturated hydrocarbon is at least partly evaporated off.

3. The process according to claim 2, wherein a mixture of the isobutene polymer and of the saturated hydrocarbon is preheated and decompressed, the saturated hydrocarbon evaporating at least partly owing to the decompression.

4. The process according to claim 2 or 3, wherein the steps of adding hydrocarbon and evaporating it off are repeated at least once.

5. The process according to any of the preceding claims, wherein at least 90% by weight of the saturated hydrocarbon has a boiling point at standard pressure within a temperature range of 15°C.

6. The process according to any of the preceding claims, wherein at least 40% by weight of the saturated hydrocarbon has a boiling point which is between the boiling points of isobutene dimer and isobutene trimer.

7. The process according to any of claims 1 to 5, wherein at least 40% by weight of the saturated hydrocarbon has a boiling point which is between the boiling points of isobutene trimer and isobutene tetramer.

8. The process according to any of the preceding claims, wherein the saturated hydrocarbon has from 10 to 16 carbon atoms.

9. The process according to any of the preceding claims, wherein the isobutene polymer is admixed with a nonvolatile diluent before the stripping.

10. The process according to any of the preceding claims, wherein the isobutene polymer has a number-average molecular weight of from 900 to 2500.

11. The process according to any of the preceding claims, wherein the isobutene oligomers comprise from 2 to 6 isobutene units.

## Revendications

1. Procédé pour l'élimination d'oligomères d'isobutène d'un polymère d'isobutène présentant un poids moléculaire numérique moyen de 500 à 5000, en ce qu'on rectifie le polymère d'isobutène tel quel ou sous forme d'une solution avec des vapeurs d'un hydrocarbure saturé comprenant 10 à 20 atomes de carbone et on chasse les oligomères d'isobutène au moins partiellement, les oligomères d'isobutène étant des molécules éthyléniquement insaturées formées par des unités répétitives d'isobutène présentant un poids moléculaire inférieur à 500.

2. Procédé selon la revendication 1, le polymère d'isobutène étant additionné de l'hydrocarbure saturé et l'hydrocarbure saturé étant au moins partiellement éliminé par évaporation.

3. Procédé selon la revendication 2, un mélange du polymère d'isobutène et de l'hydrocarbure saturé étant chauffé et détendu, l'hydrocarbure saturé s'évaporant au moins partiellement suite à la détente.

4. Procédé selon la revendication 2 ou 3, les étapes d'addition d'hydrocarbure et d'élimination par évaporation d'hydrocarbure étant répétées au moins une fois.

5. Procédé selon l'une quelconque des revendications précédentes, au moins 90% en poids de l'hydrocarbure saturé présentant un point d'ébullition à pression normale situé dans une plage de température de 15°C.

6. Procédé selon l'une quelconque des revendications précédentes, au moins 40% en poids de l'hydrocarbure saturé présentant un point d'ébullition qui se situe entre les points d'ébullition du dimère d'isobutène et du trimère d'isobutène.

7. Procédé selon l'une quelconque des revendications 1 à 5, au moins 40% en poids de l'hydrocarbure saturé présentant un point d'ébullition qui se situe entre les points d'ébullition du trimère d'isobutène et du tétramère d'isobutène.

8. Procédé selon l'une quelconque des revendications précédentes, l'hydrocarbure saturé présentant 10 à 16 atomes de carbone.

9. Procédé selon l'une quelconque des revendications précédentes, le polymère d'isobutène étant additionné avant la rectification d'un diluant peu volatil.

10. Procédé selon l'une quelconque des revendications précédentes, le polymère d'isobutène présentant un poids moléculaire numérique moyen de 900 à 2500.

11. Procédé selon l'une quelconque des revendications précédentes, les oligomères d'isobutène comprenant 2 à 6 unités d'isobutène.
